# EUROPEAN PATENT APPLICATION

(11) **EP 2 146 291 A1**
(43) Date of publication of application: **20.01.2010**
(21) Application number: 09009019.2
(22) Date of filing: 10.07.2009
(51) Int. Cl.: G06F 17/30

(54) **Method and system for providing interface of web page**

(30) Priority: 10.07.2008 KR 20080067055
(71) Applicant: Logicplant, Seocho-ku, Seoul 137-060 (KR)
(72) Inventor: Shim, Jae Bum, Seoul 137-060 (KR); Kim, Tae Yun, Seoul 137-060 (KR)
(74) Representative: Klunker . Schmitt-Nilson . Hirsch

(57) **Abstract**

The present invention relates a system for providing an interface of a web page. A system for providing an interface of a web page according to the present invention: a web server that generates pagelet information including a portion of web page providing information and when a terminal requests the transmission of the web page, transmits a web page including the pagelet information to the terminal; and a terminal that extracts a pagelet information from the web page to generate a pagelet and displays a pagelet capable of controlling a screen independent of the web page when the terminal requests the transmission of the web page to the web server and receives the web page from the web server.

With the present invention, the terminal having the display device having a limited size can conveniently use the information of the web page using the pagelet that is a small-sized web page.

## Description

### BACKGROUND OF THE INVENTION

### 1. Field of the Invention

The present invention relates to a method and system for providing an interface of a web page, and in particular, to a method and system for providing an interface of a web page capable of providing a small-sized web page including a portion of web page information in a terminal including a display having a limited size.

### 2. Description of the Related Art

Currently, terminals having various sizes have been used in a communication system. An example of the terminal used in the communication system may include a personal computer (PC), a notebook, a wired telephone, a cellular phone, a portable multimedia player (PMP), a digital multimedia broadcasting player (DMB player), a smart phone, an ultra mobile PC (UMPC), etc.

Further, in the communication system, a service area of web browsing services has been gradually extended with the development of a data transmitting and receiving technology and the extension of Internet and a personal computer and other terminals tend to provide web browsing services.

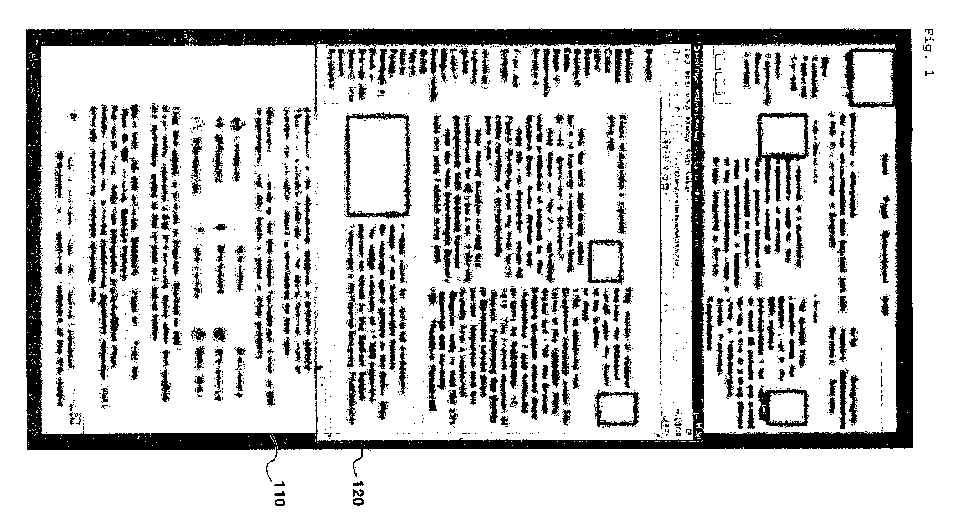

First, a case where a personal computer provides web browsing services will be described with reference to FIG. 1.

FIG. 1 is a diagram showing a display screen of a person computer that provides general web browsing services.

Referring to FIG. 1, a display screen 120 for a personal computer, which receives the entire web page 110 and the web browsing services according to the provision of the web browsing services, is shown.

The entire web page 110 has an area lager than an area read through an actual display device, such that the display device of the personal computer can read only some areas of the entire web page 110.

The area size read in the personal computer, that is, the display resolution is 1024 x 768 as one example, which is sufficient to acquire significant information within one reading area and the web page is fabricated to be able to be conveniently read in the display area having resolution of 1024 x 768, such that the web browsing services can be easily provided to a user.

As such, the personal computer has a sufficient sized reading area, such that the web browsing services can be easily provided to a user using the web page displayed on the personal computer screen.

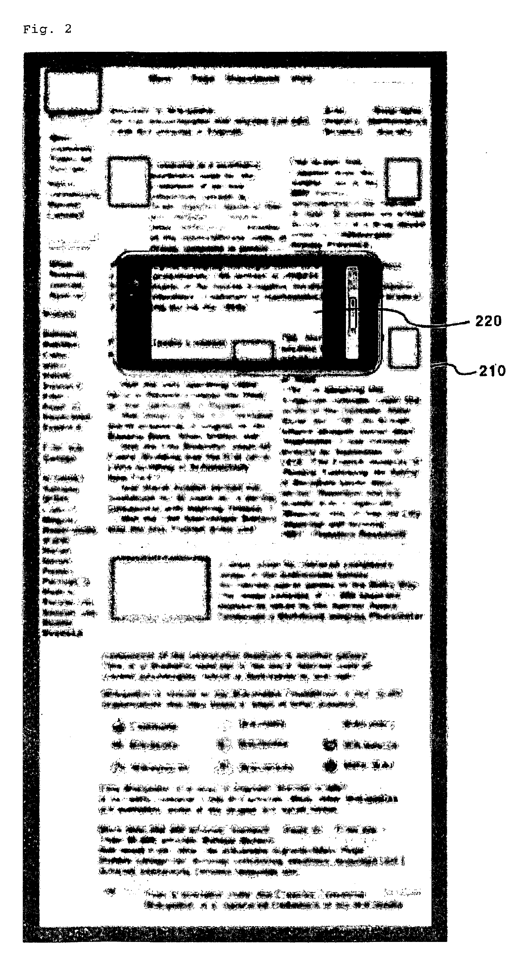

However, all the current terminals do not necessarily include the display device having a sufficient reading area such as the personal computer. In particular, a mobile terminal such as a mobile phone is limited in terms of its size due to characteristics of portability and mobility, such that the mobile terminal includes a display device having a limited size.
A case where the terminal including the display device having a limited size, for example, the mobile terminal provides the web browsing services will be described with reference to FIG. 2.

FIG. 2 is a diagram showing a display screen for a mobile terminal that provides general web browsing services.

Referring to FIG. 2, the display screen 120 for the mobile terminal, which receives the entire web page 210 and the web browsing services according to the provision of the web browsing services, is shown.

The mobile terminal has, for example, display resolution of 432 x 240 much lower than the personal computer. Therefore, the mobile terminal cannot read the entire web page 210 at one time and is largely insufficient to acquire significant information within one reading area. Further, the web page is not also fabricated to meet the corresponding area size, such that it is difficult to provide the web browsing services to the user.

In addition, it is more difficult for the terminals having the display device smaller than the mobile terminal to provide the web browsing services to the user.

Currently, the web browsing system uses the following method to provide the web browsing services to the terminal including the display device having a limited size such as the mobile terminal.

First, the web browsing system provides the web browsing services to meet the width (breadth) of the entire web page to the width of the reading area of the display device having a limited size for the terminal. At this time, the terminal can read the web page without moving the reading area left and right such as reading the web page in the personal computer, but may be hard to read the web page since the width of the web page considered at the time of designing the web page is excessively narrow.

Second, the web browsing system independently sets the width of the web page and the width of the reading area in the entire web page, respectively, to provide the web browsing services to the terminal. At this time, the width of the web page is wider than

Third, the web browsing system should read the entire web page by reducing it a predetermined magnification. In this case, if the entire web page is appropriately reduced in the reading area, the contents of the web page can be more read. However, since a letter is reduced, such that it is difficult to read the contents of the web page.

Each of the web browsing service methods has disadvantages, such that it is difficult to use the web page at a level such as a personal computer.

In particular, when a terminal having a small-sized display device displays a web page, most contents of the web page are actually out of the reading area of the display device, such that it is difficult to acquire or use information or the contents of the web page are reduced, such that it is difficult for a user to identify the contents.

### SUMMARY OF THE INVENTION

It is an object of the present invention to provide a method and system for providing an interface of a web page in a terminal including a display device having a limited size.

It is another object of the present invention to provide a method and system for providing an interface of a web page capable of acquiring and using web page information in a terminal including a display device having a limited size.

It is yet another object of the present invention to provide a method and system for providing an interface of a web page capable of identifying web page information in a terminal including a display device having a limited size.

In order to achieve the above objects, there is provided a system for providing an interface of a web page according to the present invention, including: a web server that generates pagelet information including a portion of web page providing information and when a terminal requests the transmission of the web page, transmits a web page including the pagelet information to the terminal; and a terminal that extracts pagelet information from the web page to generate a pagelet and displays a pagelet capable of controlling a screen independent of the web page when the terminal requests the transmission of the web page to the web server and receives the web page from the web server.

In order to achieve the above objects, there is provided a method for providing an interface of a web page according to the present invention, including: generating pagelet information including a portion of web page providing information; requesting the transmission of the web page to the web server by a terminal; transmitting the web page including the pagelet information from the web server to the terminal in response to the web page transmission request; extracting the pagelet information to generate the pagelet when the terminal receives the web page; and displaying the pagelet capable of a screen independent of the web page in the terminal.

In order to achieve the above objects, there is provided a web server for providing an interface of a web page according to the present invention, including: a pagelet generator that generates pagelet information including a portion of web page providing information; a web page generator that generates a web page including the pagelet information; a transmitter/receiver that receives a web page transmission request from the terminal and transmits the web page including the pagelet information to the corresponding terminal in response to the web page transmission request; and a server controller that controls the web page generator to generate the web page including the pagelet information and to transmit the generated web page to the terminal through the transmitter/receiver.

In order to achieve the above objects, there is provided a method for providing an interface of a web page from a web server, including: generating pagelet information including a portion of web page providing information; receiving messages that requests the transmission of the web page from a terminal; and transmitting the web page including the pagelet information to the terminal in response to the web page transmission request.

In order to achieve the above objects, there is provided a terminal for providing an interface of a web page, including: atransmitter/receiver that transmits a message requesting the transmission of a web page and receives the web page from the web server; a terminal controller that extracts pagelet information including a portion of web page providing information from the web page to generate a pagelet and controls to display the generated pagelet through a display device; and a display device that displays the pagelet capable of controlling a screen independent of the web page.

In order to achieve the above objects, there is provided a method for providing an interface of a web page from a terminal, including: requesting the transmission of a web page to a web server; when receiving the web page, extracting pagelet information including a portion of web page providing information using the received web page to generate a pagelet; and displaying the pagelet capable of controlling independent of the web page.

The present invention provides a small-sized web page including a portion of web page information in a terminal having a limited display size. Therefore, the present invention can provide the interface of a web page to a user using a small-sized web page including necessary information even in the terminal including the display device having a limited size. In addition, the present invention can conveniently use the web page using the small-sized web page, that is acquire and use the web page information, using the small-sized web page even in the terminal including the display device having a limited size. Further, the present can identify the web page information in the terminal including the display device having a limited size.

### BRIEF DESCRIPTION OF THE DRAWINGS

FIG. 1 is a diagram showing a display screen of a personal computer providing a web browsing service;
FIG. 2 is a diagram showing a display screen of a mobile terminal providing a general web browsing service;
FIG. 3 is a diagram showing a mobile terminal screen that provides the web browsing service using the pagelet according to the embodiment of the present invention;
FIG. 4 is a diagram showing a system structure that provides an interface of a web page using the pagelet according to the embodiment of the present invention;
FIG. 5 is a diagram showing a web server of the system for providing an interface of a web page according to the embodiment of the present invention;
FIG. 6 is a diagram showing a terminal of the system for providing an interface of a web page according to the embodiment of the present invention;
FIG. 7 is a signal flowchart showing the operation of the web server and terminal that provide an interface of a web page using the pagelet according to a first embodiment of the present invention;
FIG. 8 is a signal flowchart showing the operation of the web server and terminal that provide an interface of a web page using the pagelet according to a second embodiment of the present invention; and
FIG. 9 is a diagram showing an HTML code into which the pagelet information is inserted, according to the embodiment of the present invention.

### DETAILED DESCRIPTION OF THE PREFERRED EMBODIMENTS

Hereinafter, exemplary embodiments of the present invention will be described in detail with reference to the accompanying drawings. It is to be noted that only a portion necessary to help the operation according to the present invention will be described below and the remaining description will be omitted not to obscure the subject of the present invention.

The present invention provides a method and system for providing an interface of a web page. In particular, the present invention provides a method and system for providing an interface of a web page capable of providing a small-sized web page including a portion of web page information, that is, a pagelet together with a web page.

For convenience of explanation, a terminal including a display device having a limited size may be, for example, a mobile terminal, etc., such as a cellular phone. However, the present invention can be applied to the mobile terminal as well as all the terminals having a display device. In addition, the present invention can be applied to all the wired and wireless communication systems capable of providing web browsing services.

The pagelet is a small-sized web page including a portion of web page information, for example, a function of searching a web page, a web site link in a web page, main content summary information of a web page. The pagelet summarizes a main function of a web page and is logically included in the web page. In addition, the pagelet may further include specific information selected by a terminal within the web page or information specialized in the terminal.

The pagelet is controlled by the reading area movement of the web page other than the pagelet and the screen control operation independent of the screen control operation such as the content zoom-in/zoom-out, etc. In other words, when the web page is zoomed-in/zoomed-out, the pagelet is not zoomed-in/zoomed-out simultaneously with the web page. The terminal uses a user input separate from the web page, such as the selection of a separate key or menu, the input of a separate mouse, etc., in order to control the screen control of the pagelet. In addition, the pagelet information included in the pagelet is displayed at a preset size, that is, at a size larger than a minimum size capable of being confirmed with the naked eye of a user regardless of the size of the terminal display device. Further, the pagelet is displayed in the terminal display device and can be positioned at an upper end, a lower end, a right side, a left side, a right upper end, a left upper end, a left lower end, etc., based on the center (right center) of the display device and can be moved in the reading area of the display device.

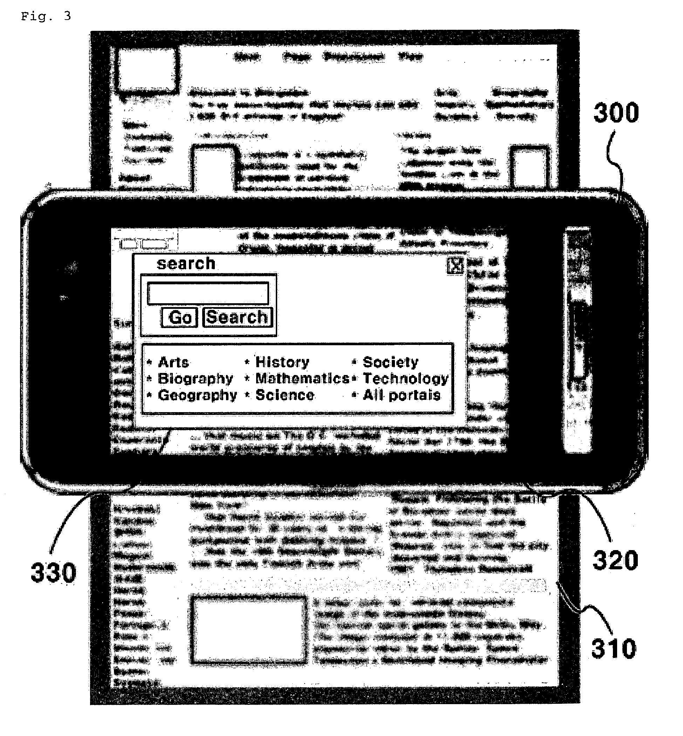

The case where the terminal, for example, the mobile terminal provides the web browsing service using the pagelet will be described below with reference to FIG. 3.

FIG. 3 is a diagram showing a mobile terminal screen that provides the web browsing service using the pagelet according to the embodiment of the present invention.

Referring to FIG. 3, a mobile terminal 300 including a display device having a limited size is shown. Further, the entire web page 310 according to the provision of the web browsing service and a display screen 320 of the mobile terminal 300 receiving the web browsing service are shown.

Herein, the web page is displayed by reducing the entire web page at predetermined magnification to meet to the width of the reading area of the display screen 320. For example, the entire web page can be displayed by reducing at predetermined magnification such as 75%, 50%, 25%, etc.

However, the web page can be displayed by various methods in addition to a method for displaying the entire web page by reducing at predetermined magnification and the display of the web page departs from the scope of the present invention and the detailed description thereof will therefore be omitted.

Meanwhile, a pagelet 330 proposed in the present invention is displayed on the display screen 320. The pagelet 330 includes, for example, a function of searching a web page, a web site link in the web page, information specialized in the mobile terminal, etc.

The pagelet 330 is displayed in an independent form regardless of the web page form. Herein, it is assumed that the pagelet information included in the pagelet 330 is displayed at the same size as the original size of the web page. At this time, the pagelet 330 can simultaneously confirm the contents of the web page by transparently setting a skin and can variably set transparency according to the control of the mobile terminal. In addition, the pagelet 330 can be used by zooming-out, zooming-in, and moving a size in the display screen by controlling the mobile terminal

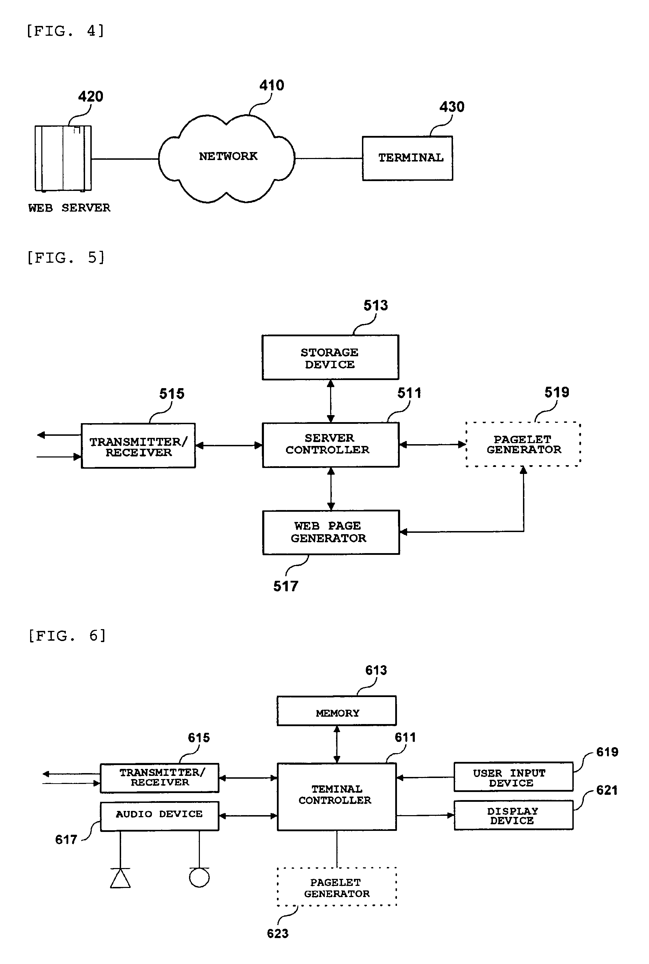

Next, a system for providing an interface of a web page using the pagelet proposed in the present invention will be described with reference to FIG. 4.

FIG. 4 is a diagram showing a system structure that provides an interface of a web page using the pagelet according to the embodiment of the present invention.

Referring to FIG. 4, the system for providing an interface of a web page includes a web server 420 and a terminal 430. The web server 420 and the terminal 430 are connected to each other through a network 410.

The network 410 includes all the wired and wireless networks.

The web server 420 is installed with a web server program and the terminal 430 is installed with a web browser. The web browser 420 can be installed in the web server.

A method for generating the pagelet between the web server 420 and the terminal 430 will be described.

First, there is a method of allowing the web server 420 to generate the web page using the pagelet information included in the web page and allowing the terminal 430 receiving the web page to extract the pagelet information from the web page and to generate the pagelet.

Second, there is a method of allowing the web server 420 to generate the web page and the pagelet, respectively.

Third, there is a method of allowing the web server 420 to transmit the web page to the terminal 430 and allowing the terminal 430 to generate the pagelet using the web page.

Next, the structure of the web server will be described with reference to FIG. 5.

FIG. 5 is a diagram showing the web server of the system for providing an interface of a web page according to the embodiment of the present invention.

Referring to FIG. 5, the web server includes a sever controller 511, a storage device 513, a transmitter/receiver 515, a web page generator 517, and a pagelet generator 519.

The storage device 513 stores programs for driving the web server and data for providing the web browsing service. In addition, data generated to perform programs are temporarily stored in the storage device 513 and the web server program for providing the web browsing service and the information for generation the web page are stored in the storage device 513. The web browser can be stored in the storage device 513.

The transmitter/receiver 515 processes signals received in the web server and signals transmitted from the web server. The transmitter/receiver 515 receives a message that requests the transmission of the web page or requests the transmission of the pagelet from the terminal and transmits the web page or the pagelet to the corresponding terminal in response to the received message.

The web page generator 517 generates the web page through the control of the server controller 511. When the web page generator 517 generates the web page, it can generate the web page including the information for generating the pagelet, that is, the pagelet information. In addition, when the web page generator 517 generates the web page, it can generate the web page including the information for requesting the pagelet, that is, the pagelet request information.

Herein, the pagelet information is included in the pagelet when generating the pagelet and the pagelet request information is information used for requesting the transmission of the pagelet to the web server.

The pagelet information includes, for example, the search function related information of the web page, the web site link information in the web page, the web page main content summary information, the information specialized in the terminal, etc. The information specialized in the terminal includes, for example, the advertisement information based on the terminal position, etc. The advertisement information based on the terminal position includes advertisement information on a place such as a theater, a restaurant, etc., at which the terminal is positioned. As the information specialized in the terminal, various information according to the advertisement based on the terminal position as well as the terminal characteristics, the contents characteristics provided from the terminal, etc. can be added. In addition, the advertisement information based on the terminal position can be used in the mobile terminal, etc.

The advertisement information based on the position information can be included in the pagelet rather than being included in all the web pages. The terminal transmits the position information of the terminal to the web server through the web browser using the web page request signal when the position of the current terminal can be confirmed. The web server transmits the pagelet including the advertisement information based on the position of the terminal to the terminal.

The pagelet request information includes pagelet reference information that can request the pagelet such as a uniform resource locator (hereinafter, referred to as 'URL'), etc., that can request the pagelet.

The pagelet generator 519 generates the pagelet through the control of the server controller 511. If the pagelet information is included when generating the web page in the web page generator 517, the pagelet generator 519 generates the pagelet information and can provide it to the web page generator 517. In addition, when generating the pagelet in the terminal, the pagelet generator 519 cannot be included in the web server.

The server controller 511 controls the overall operation of the web server. When the server controller 511 receives the web page transmission request message or the pagelet transmission request message from the terminal through the transmitter and receiver 515, it controls the transmitter and receiver 515 to transmit the web page or pagelet to the terminal in response to the message.

The server controller 511 can control to store the web page and the pagelet generated from the web page generator 517 and the pagelet generator 519 in the storage device 513. In addition, when requesting the web page or the pagelet from the terminal, the server controller controls to transmit the web page or the pagelet stored in the storage device 515 to the terminal through the transmitter and receiver 515.

Next, the structure of the terminal will be described with reference to FIG. 6.

FIG. 6 is a diagram showing the terminal of the system for providing an interface of a web page according to the embodiment of the present invention.

Referring to FIG. 6, the terminal includes a terminal controller 611, a memory 613, a transmitter/receiver 615, an audio device 617, a user input device 619, a display device 621, and a pagelet generator 623.

The memory 613 can be configured to include a program memory and a data memory. The program memory stores programs for controlling a general operation of the terminal and programs for providing the web page or the pagelet. Data generated during the execution of programs are temporarily stored in the data memory and in particular, data for displaying the pagelet according to the embodiment of the present invention are temporarily stored in the data memory. In addition, the web browser can be stored in the memory 613.

The transmitter and receiver 615 processes the operation of transmitting and receiving signals, transmits a message requesting the transmission of the web page or pagelet, and receives the web page or pagelet in response to the transmitted message.

The audio device 617 reproduces audio signals to output them through a speaker or process transmission audio signals generated from a mike.

The user input device 619 can be configured of a keypad, a touch screen, etc. and when a button is pressed or touched by a user, transmits user input signals to the terminal controller 611.

The display device 621 can be configured of a liquid crystal display (LCD), etc. and displays display data generated during the execution of the terminal function under the control of the controller. In addition, the display device 621 displays the pagelet including a portion of the web page information and the web page. When the pagelet is displayed on the display device 621, it can be displayed to be separate from the web page on an area on one display device or can be displayed to be overlapped with the web page thereon. Further, when the display device 621 is divided into, for example, two or more hardware, the web page can be displayed on a first display device and the pagelet can be displayed on a second display device.

The pagelet generator 623 generates the pagelet using the web page received through the control of the server controller 611. In addition, the pagelet generator 623 generates the pagelet using the pagelet information when the web page received from the web server includes the pagelet information. When receiving the pagelet from the web server, the pagelet generator 623 cannot be included in the terminal.

The terminal controller 611 controls the overall operation of the terminal. The terminal controller 611 transmits the message requesting the transmission of the web page or pagelet through the transmitter and receiver 615 and receives the web page or pagelet in response to the message.

The terminal controller 611 generates the pagelet using the pagelet information when the pagelet information is included in the received web page.
Moreover, the terminal controller 611 generates the pagelet through the pagelet generator 623 when the pagelet information is not included in the received web page. When the pagelet request information is included in the web page, the terminal controller 611 generates the pagelet transmission request message requesting the transmission of the pagelet to the web server using the pagelet request information. Herein, the pagelet request information includes the pagelet reference information that can request the pagelet, for example, pagelet, URL, etc. Thereafter, the terminal controller 611 transmits the generated pagelet request message to the web server through the transmitter and receiver 615.

The terminal controller 611 displays the web page on the display device 621 and displays the received pagelet or the pagelet generated inside the terminal on the display device 621.

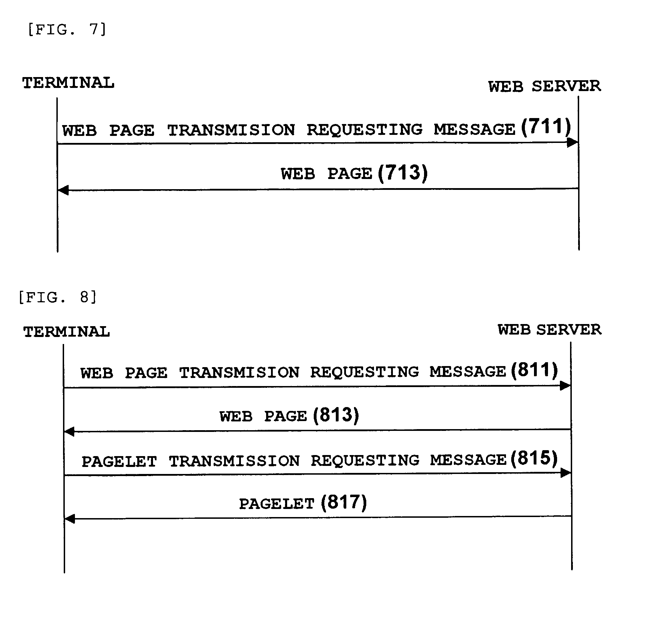

Next, the operation of the web server and terminal that provide an interface of a web page using the pagelet will be described with reference to FIGS. 7 and 8.

FIG. 7 is a signal flowchart showing the operation of the web server and terminal that provide an interface of a web page using the pagelet according to a first embodiment of the present invention.

Referring to FIG. 7, the terminal transmits the messages requesting the transmission of the web server to the web server (step 711).

If the web server requests the messages requesting the transmission of the web page from the terminal, it transmits the web page in response to the received message (step 713).

Herein, the web server generates at least one of the pagelet information and the pagelet request information in response to the web page and transmits the generated pagelet information and the pagelet request information to the terminal. If there is a terminal that does not support the display of the pagelet, the web server does not transmit the pagelet information or the pagelet request information. The web server receives the information for generating the pagelet in response to the web page from the web page provider and generates the pagelet using the same.

If the terminal receives the web page, it confirms whether the pagelet information is included in the web page. As the confirmation result, when the pagelet information is included in the web page, the pagelet information is extracted. The terminal generates the pagelet using the extracted pagelet information and displays the generated pagelet. As the confirmation result, when the pagelet information is not included in the web page, the terminal uses the web page to generate the pagelet and displays the generated pagelet.

FIG. 8 is a signal flowchart showing the operation of the web server and terminal that provide an interface of a web page using the pagelet according to a second embodiment of the present invention.

Referring to FIG. 8, the terminal transmits the messages requesting the transmission of the web server to the web server (step 811).

If the web server requests the messages requesting the transmission of the web page from the terminal, it transmits the web page in response to the received message (step 813).

The web server transmits only the web page to the terminal or transmits the information for requesting the pagelet transmission, that is, the web page including the pagelet request information.

The terminal transmits the messages requesting the pagelet transmission to the web server (step 815). The terminal transmits the messages requesting the pagelet transmission using the pagelet request information when the pagelet request information is included in the web page received from the web server.

When the web server receives the pagelet transmission request message from the terminal, the web server transmits the pagelet to the terminal in response to the pagelet transmission request (step 817).

The terminal receiving the pagelet displays the pagelet on the terminal.

In FIGS. 7 and 8, the web server can previously generate and store the web page and the pagelet therein or can generate the web page and the pagelet when the web page and pagelet are requested from the terminal.

Further, when the pagelet is displayed on the display device of the terminal, that is, the display device, the terminal can display the pagelet at any one of a point in time when the web page is displayed, a point in time when the key input for displaying the pagelet exists, a point in time when the menu selection for displaying the pagelet exists, and a point in time when the value of the pagelet display locator included in the pagelet information is indicated.

Herein, the pagelet display locator specifies a point in time when the pagelet is displayed and a specifiable point in time may include a point in time when the web page is displayed, a point in time when the specific key input exists, a point in time when the menu selection exists, etc. A method of specifying a point in time can use a method of using the additional attribute of a pagelet tag such as <pagelet autoshow = "true"> <pagelet>. This case is expressed to display the pagelet when the web page is displayed on the terminal.

In particular, when the terminal displays the pagelet, the pagelet is displayed to have a size larger than a minimum size capable of being identified with the naked eye of a user. As one example, the pagelet is displayed at the same size as the original size of the web page.

Meanwhile, although the foregoing description mainly describes the web server, the web server can be replaced with the storage medium or another server that can provide the information for generating the pagelet or the pagelet.

The operation of transmitting and receiving the pagelet information or pagelet for the pagelet display will be described below.

First, the pagelet information can be included in the web page using a hypertext markup language (hereinafter, referred to as 'HTML'). Herein, a case where the pagelet information is included in the web page using the HTML will be described with reference to FIG. 9.

FIG. 9 is a diagram showing an HTML code into which the pagelet information is inserted, according to the embodiment of the present invention.

Referring to FIG. 9, the HTML is one kind of basic programming languages used for creating web documents and an instruction word used for the HTML is referred to a tag. The tag is configured of two pairs that represent start and end.

The web server uses the HTML surrounded by a specific tag within the web page configured of the HTML to include the pagelet information 910.

Thereby, the pagelet information 910 is included in the HTML code.

When the web browser of the terminal requesting the web page intends to receive the pagelet information 910, if a user agent character string of the web page request message includes a character called 'pagelet', the web server includes the web page including the pagelet information.

In addition, when the web browser of the terminal requesting the web page does not include the character called 'pagelet' in the user agent character string, the web server generates the web page not including the pagelet information.

As described above, when transmitting the message requesting the pagelet that includes the information requesting the generation of the pagelet, the web server can transmit the web page selectively including the pagelet information 910.

The web server used the tag called 'pagelet' for the pagelet information 910 in the HTML code Therefore, when the pagelet information is included in the web page, that is, inside the HTML, the analyzer of the web browser should be modified or changed to be able to extract the pagelet information 910 from the web browser of the terminal.

Second, the pagelet information can be included in the web page using iframe of the web page.

When the iframe exists in the web page, a portion, which does not use the HTML, exists in the iframe. The web server can transmit the pagelet information included in the portion, which does not use the HTML, to the terminal.

The iframe including the pagelet information can be classified into 'iframe for pagelet' and since the iframe uses a separate URL from the web page, it can be independently managed from the web page.

When the web server uses the iframe, the terminal analyzes the web page using the web page analyzer and the pagelet information can be analyzed using a simple analyzer.

In particular, when the web browser is based on a server, the web server analyzes the web page and transmit the properly converted information to the terminal and the pagelet information can be analyzed using the simplified analyzer mounted on the terminal.

Third, there is a method that inserts an application programming interface (hereinafter, referred to as 'API') or a script object related to the pagelet in the web page using the web browser.

When the web page is driven in the web browser of the terminal, the web browser of the terminal confirms whether the application programming interface or the script object related to the pagelet is in the web page using Javascript, etc. As the confirmation result, when there is the application programming interface or the script object related to the pagelet, the terminal can receive the pagelet information from the web server and transmit the pagelet information generated inside the web page to the web browser using eXtensible Markup Language Hypertext Transfer Protocol Request (hereinafter, referred to as 'XML HTTP Request') that is used in Asynchronous Javascript and eXtensible Markup Language (hereinafter, referred to as 'Ajax').

Fourth, the terminal can request the pagelet to the web server using a uniform resource locator of the web page. For example, when the uniform resource locator of the web page is 'http://www.aaa.com/sample.htm', the uniform resource location requesting the pagelet using the uniform resource locator is set as 'http://www.aaa.com/sample.pgl', such that it can be used to request the pagelet. When the web server generates and stores the pagelet and receives the pagelet request using the uniform resource locator from the terminal, it transmits the stored pagelet to the terminal.

Fifth, only the web page is received inside the terminal to generate the pagelet from the web page. In this case, the web server does not perform the operation of generating the separate pagelet.

The five operations of transmitting and receiving the pagelet information or pagelet for the pagelet display are described by way of example only and therefore, the present embodiment is not limited thereto.

Meanwhile, the pagelet may include the additional information specialized in the terminal. The additional contents specialized in the terminal may be a portion of the web page providing information or information additionally generated with reference to the web page in the terminal.

The pagelet is logically connected with the web page, but displayed on the display independent of the web page. In addition, the terminal displays the pagelet having a previously set size or more, such that it can provide the web browsing service to the user without being affected by the display device having a limited size.

The pagelet is independently displayed from the web page and is a summary version or a core function abridged version of the web page. Herein, the pagelet information included in the pagelet is displayed to have a size larger than a minimum size capable of being confirmed with the naked eye of the user.

As described above, the preferred embodiments have been described and illustrated in the drawings and the description. Herein, specific terms have been used, but are just used for the purpose of describing the present invention and are not used for defining the meaning or limiting the scope of the present invention, which is disclosed in the appended claims. Therefore, it will be appreciated to those skilled in the art that various modifications are made and other equivalent embodiments are available. Accordingly, the actual technical protection scope of the present invention must be determined by the spirit of the appended claims.

## Claims

1. A system for providing an interface of a web page, comprising:
a web server that generates pagelet information including a portion of web page providing information and when a terminal requests the transmission of the web page, transmits a web page including the pagelet information to the terminal; and
a terminal that extracts pagelet information from the web page to generate a pagelet and displays a pagelet capable of controlling a screen independent of the web page when the terminal requests the transmission of the web page to the web server and receives the web page from the web server.

2. The system for providing an interface of a web page according to claim 1, wherein the pagelet information includes at least one of a function of searching a web page, a web site link in a web page, main content summary information of a web page, and information specialized in the terminal.

3. The system for providing an interface of a web page according to claim 1 or 2, wherein the web server generates the pagelet, transmits the pagelet request information that can request the pagelet to the terminal, and transmits the pagelet when requesting the pagelet transmission using the pagelet request information from the terminal.

4. The system for providing an interface of a web page according to claim 3, wherein the pagelet request information includes a uniform resource locator that can request the pagelet.

5. The system for providing an interface of a web page according to any of claims 1 to 4, wherein the terminal generates the pagelet using the web page when the pagelet information is not included in the received web page and displays the generated pagelet.

6. The system for providing an interface of a web page according to any of claims 1 to 5, wherein the terminal displays the pagelet at any one of a point in time when the web page is displayed, a point in time when a key input for displaying the pagelet exists, a point in time when a menu selection for displaying the pagelet exists, and a point in time when a value of the pagelet display locator included in the pagelet information is indicated.

7. The system for providing an interface of a web page according to any of claims 1 to 6, wherein the terminal displays the pagelet by any one of a scheme of separately displaying the pagelet from the web page through a separate display from the web page, a scheme of displaying the pagelet to be discriminated from the web page on one display device, and a scheme of displaying the pagelet to be overlapped with the web page on one display device.

8. A method for providing an interface of a web page, comprising:
generating pagelet information including a portion of web page providing information from the web server;
requesting the transmission of the web page to the web server by a terminal;
transmitting the web page including the pagelet information from the web server to the terminal in response to the web page transmission request; extracting the pagelet information to generate the pagelet when the terminal receives the web page; and
displaying the pagelet capable of a screen independent of the web page in the terminal.

9. The method for providing an interface of a web page according to claim 8, wherein the displaying the pagelet further includes:
generating the pagelet from the web server;
transmitting pagelet request information that can request the pagelet from the web server to the terminal;
requesting the pagelet transmission using the pagelet request information in the terminal;
transmitting the pagelet from the web server to the terminal corresponding to the pagelet transmission request; and receiving and displaying the pagelet in the terminal.

10. The method for providing an interface of a web page according to claim 8 or 9, wherein the displaying the pagelet further includes:
generating the pagelet using the received web page from the terminal when the pagelet information is not included in the received web page; and displaying the generated pagelet in the terminal.

11. A web server for providing an interface of a web page, comprising:
a pagelet generator that generates pagelet information including a portion of web page providing information;
a web page generator that generates a web page including the pagelet information;
a transmitter/receiver that receives a web page transmission request from the terminal and transmits the web page including the pagelet information to the corresponding terminal in response to the web page transmission request; and
a server controller that controls the web page generator to generate the web page including the pagelet information and to transmit the generated web page to the terminal through the transmitter/receiver.

12. The web server for providing an interface of a web page according to claim 11, wherein the server controller controls to generate the pagelet, transmit the pagelet request information that can request the pagelet, and transmit the pagelet using the generated pagelet when requesting the pagelet transmission using the pagelet request information from the terminal.

13. A terminal for providing an interface of a web page, comprising:
a transmitter/receiver that transmits a message requesting the transmission of a web page and receives the web page from the web server;
a terminal controller that extracts pagelet information including a portion of web page providing information from the web page to generate a pagelet and controls to display the generated pagelet through a display device; and
a display device that displays the pagelet capable of controlling a screen independent of the web page.

14. The terminal for providing an interface of a web page according to claim 13, wherein the terminal controller generates the pagelet, transmits the pagelet request information that can request the pagelet to the terminal, and transmits the pagelet when requesting the pagelet transmission using the pagelet request information from the terminal.

15. The terminal for providing an interface of a web page according to claim 13 or 14, wherein the terminal controller generates the pagelet using the web page when the pagelet information is not included in the received web page and displays the generated pagelet.
